# EUROPEAN PATENT APPLICATION

(11) **EP 3 910 490 A1**
(43) Date of publication of application: **17.11.2021**
(21) Application number: 21173333.2
(22) Date of filing: 11.05.2021
(51) Int. Cl.: G06F 16/22

(54) **SYSTEM AND METHOD FOR DATABASE INSTRUCTIONS FOR A COMPUTER NETWORK**

(30) Priority: 14.05.2020 IN 202011020354
(71) Applicant: Sandvine Corporation, Waterloo, Ontario N2L 3V3 (CA)
(72) Inventor: DEVARAJ, Shailesh, 560103 Bangalore (IN); SIDDALINGAIAH, Gangaraju K., 560114 Bengaluru (IN); PRABHAKAR, Bhargav Marithamanahalli, 570076 Bengaluru (IN)
(74) Representative: Murgitroyd & Company

(57) **Abstract**

A system and method for database instructions in a computer network, the method including: determining a subscriber event associated with a traffic flow; providing subscriber data, associated with the subscriber event to a network device; receiving, from the network device, subscriber id information and a plurality of subscriber rules or services as a plurality of rows; aggregating the plurality of rows to a single row; and writing the single row to a database. The system including: an input module configured to determine a subscriber event, provide subscriber data, associated with the subscriber event to a network device; and receive, from the network device, subscriber id information and a plurality of subscriber rules or services as a plurality of rows; a serialization module configured to aggregate the plurality of rows to a single row; and an output module configured to write the single row to a database.

## Description

### FIELD

The present disclosure relates generally to computer network traffic. More particularly, the present disclosure relates to a system and method for database instructions in a computer network environment.

### BACKGROUND

Databases and data stores are used frequently in computer networking. Subscriber information typically needs to be stored and updated during a data session, which is typically done with databases or data stores. When subscribers login or otherwise access the network, data associated with the network session needs to be updated and stored. Frequently, at login and throughout the data session, subscriber information and associated data needs to be reviewed, amended or updated. The more data that needs to be updated or saved, the more reading and writing to the database or data store disk will need to be done.

In some cases, the database or data store may only be able to provide for a certain number of rows to be written, read or deleted within a timeframe, which may vary with different database configurations or requirements. As such, the typical high rate of row creates, reads or deletes may cause a bottle-neck for the subscriber and computer network. As such, there is need for a system and method for improving or optimizing database instructions in a computer network environment.

The above information is presented as background information only to assist with an understanding of the present disclosure. No determination has been made, and no assertion is made, as to whether any of the above might be applicable as prior art with regard to the present disclosure.

### SUMMARY

In a first aspect, there is provide a method for database instructions in a computer network environment, the method including: determining a subscriber event associated with a traffic flow; providing subscriber data, associated with the subscriber event to a network device; receiving, from the network device, subscriber id information and a plurality of subscriber rules or services as a plurality of rows; aggregating the plurality of rows to a single row; and writing the single row to a database.

In some cases, aggregating the plurality of rows may include: determining a primary key for the single row; determining the number of bytes or length of each row of the plurality of rows; creating a prefix for as the row length for each of the plurality of rows; and concatenating the plurality of rows wherein each row is prefixed by the row length followed by the row data in the single row.

In some cases, the primary key may be based on the subscriber id.

In some cases, the network device may be a Policy and Charging Rules Function (PCRF) or the Online Charging System (OCS).

In some cases, the subscriber event may be subscriber login, a subscriber policy change or a subscriber charging change.

In some cases, aggregating the plurality of rows may include: determining if the external database has a row stored with the subscriber id; retrieving the stored row from the database; determining the number of bytes or length of each row of the plurality of rows to be added to the stored row; creating a prefix for as the row length for each of the plurality of rows to be added to the stored row; and concatenating the plurality of rows wherein each row is prefixed by the row length followed by the row data to the stored row.

In some cases, the method may further include: determining if the database has a row stored with the subscriber id; determining if the subscriber event is associated with deleting any data previously stored in the database; removing the data from the row; concatenating the remaining rows to the single row; and writing the single row to the database.

In some cases, the method may further include: retrieving the single row stored in the database; reading the single row to determine the plurality of rows; and deserialzing the single row into the plurality of rows.

In another aspect, there is provided a system for database instructions in a computer network environment, the system including: an input module configured to determine a subscriber event associated with a traffic flow, provide subscriber data, associated with the subscriber event to a network device; and receive, from the network device, subscriber id information and a plurality of subscriber rules or services as a plurality of rows; a serialization module configured to aggregate the plurality of rows to a single row; and an output module configured to write the single row to a database.

In some cases, serialization module may be further configured to: determine a primary key for the single row; determine the number of bytes or length of each row of the plurality of rows; create a prefix for as the row length for each of the plurality of rows; and concatenate the plurality of rows wherein each row is prefixed by the row length followed by the row data in the single row.

In some cases, the primary key may be based on the subscriber id.

In some cases, the network device may be a Policy and Charging Rules Function (PCRF) or the Online Charging System (OCS).

In some cases, the subscriber event may be subscriber login, a subscriber policy change or a subscriber charging change.

In some cases, the output module may be further configured to: determine if the external database has a row stored with the subscriber id; and retrieve the stored row from the database; and the serialization module may be further configured to: determine the number of bytes or length of each row of the plurality of rows to be added to the stored row; create a prefix for as the row length for each of the plurality of rows to be added to the stored row; and concatenate the plurality of rows wherein each row is prefixed by the row length followed by the row data to the stored row.

In some cases the output module may be further configured to: determine if the database has a row stored with the subscriber id; and determine if the subscriber event is associated with deleting any data previously stored in the database; and the system may further include a deserialization module configured to remove the data from the row; and concatenate the remaining rows to the single row.

In some cases the system may further include a deserialization module configured to: read the single row to determine the plurality of rows; and deserialize the single row into the plurality of rows.

Other aspects and features of the present disclosure will become apparent to those ordinarily skilled in the art upon review of the following description of specific embodiments in conjunction with the accompanying figures.

### BRIEF DESCRIPTION OF FIGURES

Embodiments of the present disclosure will now be described, by way of example only, with reference to the attached Figures.
Fig. 1 illustrates an environment for embodiments of a system or method described herein;
Fig. 2 illustrates a sequence diagram of row serialization to a database;
Fig. 3 illustrates a system for database instructions in a computer network according to an embodiment;
Fig. 4 illustrates a method for database instructions in a computer network according to an embodiment;
Fig. 5 is a graph depicting the number of database operation per table;
Fig. 6 is a sequence diagram of row serialization to a database with a system for database instructions;
Fig. 7 is a sequence diagram illustrating reading rows from a database with a system for database instructions;
Fig. 8 illustrates an example of a table indexed by subscriber name according to an embodiment; and
Fig. 9 illustrates a specific example of row serialization for a subscriber.

### DETAILED DESCRIPTION

In the following, various example systems and methods will be described herein to provide example embodiment(s). It will be understood that no embodiment described below is intended to limit any claimed invention. The claims are not limited to systems, apparatuses or methods having all of the features of any one embodiment or to features common to multiple or all of the embodiments described herein. A claim may include features taken from any embodiment as would be understood by one of skill in the art. The applicants, inventors or owners reserve all rights that they may have in any invention disclosed herein, for example the right to claim such an invention in a continuing or divisional application and do not intend to abandon, disclaim or dedicate to the public any such invention by its disclosure in this document.

Generally, the present disclosure provides a method and system database instructions, for example for improving and optimizing reading and writing to databases in a computer network. The system can be configured to include a plurality of in-memory rows for a subscriber that may be written as a single row to the database or data store. The system may review the data, concatenate the rows and create a new key based on the concatenated data. Further, when the system determines it is time to read the data, the system can be configured to read the single row from the database and deserialize the data in order for information be reviewed and associated with a subscriber.

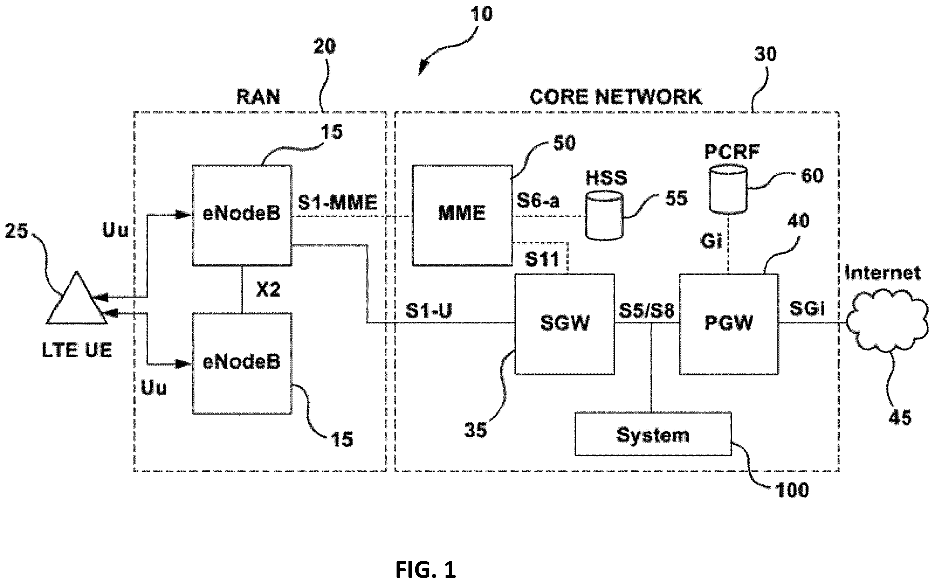

Figure 1 shows a diagram of an example of a Long Term Evolution (LTE) network 10 architecture. It will be understood that at least one Evolved Node Base station (eNodeB) resides within the LTE Radio Access Network (RAN) 20. The eNodeB is configured to allocate the network resources among the various LTE users 25. The RAN 20 is in communication with the core network 30. The eNodeB 15 connects to the core network 30 via a serving gateway (SGW) 35, which is further in communication with a packet data network gateway (PGW) 40 which is in communication with the Internet 45. The LTE network 10 further includes a Mobility Management entity (MME) 50, which is configured to track the LTE users 25. The MME 50 interacts with a Home Subscriber Server (HSS) database 55 to provide information with respect to the various users 25 of the LTE 10. The LTE 10 includes a Policy and Charging Rules Function (PCRF) 60, which is intended to provide policy control and flow based charging decisions. It will be understood that figure 1 illustrates a high level network architecture and that an LTE network may include further aspects not illustrated. Embodiments of the system and method described herein may further be applied to other networks, for example, LTE-A, 3G networks, 4G networks, 5G networks, Satellite networks, mobile networks or other networks.

A system 100 for database instructions or operations according to an embodiment is intended to reside in the core network 30. In particular, the system 100 may be an inline probe north of the PGW 40, between the SGW 35 and PGW 40, or in another location where the system is able to access the data noted herein. It will be understood that in some cases the system may be a physical network device, or may be a virtual network device. In some cases, the system 100 may send data to the cloud to be processed or the system may process the data internally. One of skill in the art will understand that cloud processing includes processing by one or more remote processors and use of remote memory to store data during processing.

A computer network generally includes a control plane. The control plane is a part of a computer network that is generally configured to carry signaling traffic and may also responsible for routing computer traffic. The control plane generally includes a database or data store where there could exist a plurality of rows for each of a plurality of subscribers. In an example for Gx, there may be a plurality of rules and/or services associated with each subscriber and/or each subscriber session. In order to provide for high-availability, these in-memory rows need to be persisted to disk, data store, database or the like (collectively referred to as a database herein). When there is a high login or logout rate there are a significant number of rows to create or delete in the database for each session and/or subscriber. This high rate of row creates and/or deletes may create a bottle-neck at the database. A bottle-neck may reduce the net throughput on the control plane.

In order to address this bottle-neck, embodiments of the system and method detailed herein are intended to provide for a plurality of in-memory rows for a subscriber to be written to a database as a single row. Though the primary key for each of the rows is generally unique (and has conventionally been considered to be combination of subscriber- identification (subscriber id) and rule-name or service-name), the plurality of in-memory rows are intended to be serialized as one row to the database using subscriber-id as key. When the data is read from the database, the system is configured to read a single row and deserialize this single row into a plurality of in-memory rows.

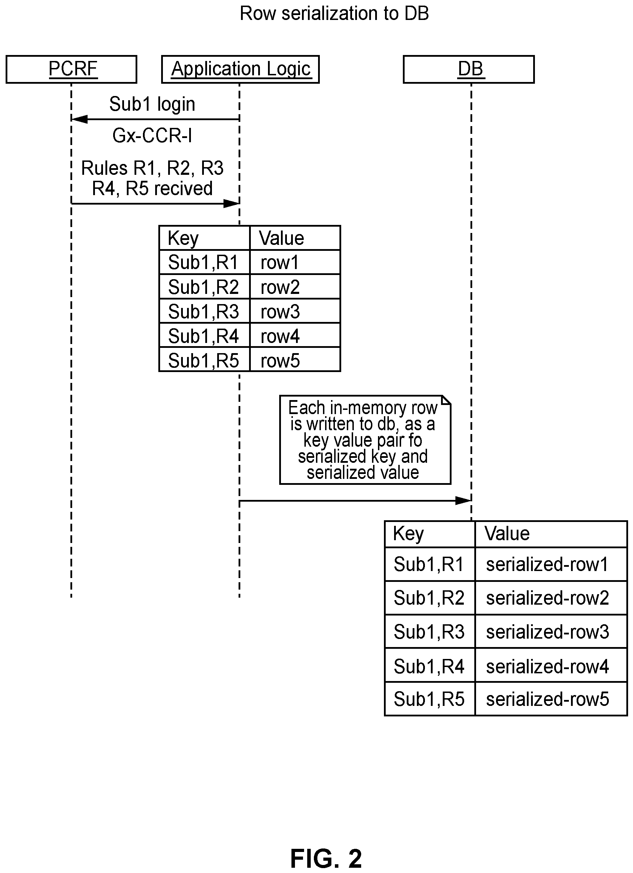

Figure 2 illustrates a sequence diagram of a conventional row serialization to a database. A subscriber logs into the computer network and the application logic determines the subscriber identity (id). In some cases, embodiments of the system and method may allow the operator to configure the subscriber ID. Traditionally, in a telecom network, Subscriber-Id could be an international mobile subscriber identity (IMSI), Mobile Station International Subscriber Directory Number (MSISDN), or the like. Rules are conventionally defined by diameter specification and implemented by the Policy and Charging Rules Function (PCRF) as a server, and Policy and Charging Enforcement Function (PCEF) as a client. On a subscriber login, rules are received for the current session from a PCRF, in this example 5 rules are retrieved, although it will be understood that more or less rules may be used. One row is traditionally created for each rule received with the subscriber-id and the rule name as key to the table. Each of these rows is typically written to the database as a serialized key and value pair. Based on the operator policies, subscriber plan, and the like, there could be several rows to be stored on subscriber login.

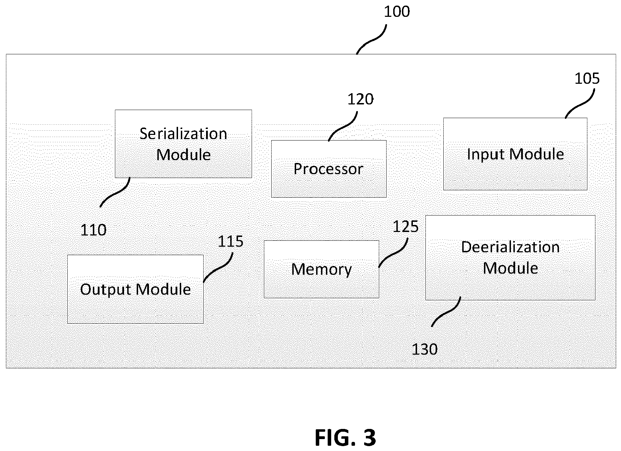

Figure 3 illustrates a system 100 for database instructions. The system includes an input module 105, a serialization module 110, an output module 115, at least one processor 120 and at least one memory component 125. In some cases, the system may further include a deserialization module 130. In some cases, the system may include a plurality of processors, including at least one processor per module. The at least one processor are intended to execute the instructions required in order for the modules to execute their proper functions. In some cases, the system may be distributed and may be housed in a plurality of network devices. In other cases, the system may reside in a single network device. In some cases, the memory 125 may be included as an internal component of the system. In other cases, the memory component may be housed externally or in a cloud and may be operatively connected to the system and the components of the system. The system is intended to improve or optimize database instructions for the network.

The input module 105 is configured to determine when a subscriber event has occurred, for example a subscriber has logged in, a subscriber policy has changed, a subscriber charging scheme has changed, or an event has occurred that will require a plurality of rows written to a database, memory or disk associated with an operator's computer network. There may also be a plurality of in-memory rows, for example, stored in the memory component 125, that could be updated and these rows could be combined to allow for a single write operation to the database on update. The input module 105 may be further configured to receive rules or services from an external networking component, for example the PCRF, or the Online Charging System (OCS), or the like. The input module 105 may further be configured to determine internal events that may also provide for an update or change in the memory rows for a subscriber. The input module 105 may associate the received data with the subscriber.

The serialization module 110 is configured to receive the plurality of rows from the input module and concatenate this data to a single database write. The serialization module 110 is configured to determine a primary key for the new row for the single database write. The serialization module 110 is also configured to determine the number of bytes or length of each row and include this data when concatenating the row to allow for the rows to be read independently once they are retrieved. Row length is pre-fixed before each row is serialized as detailed herein. The serialization then concatenates the rows with the prefix of the row length. Using the row length, the system 100 determines the total amount of bytes (data) to read for each row.

The output module 115 is configured to write to the database. The output module 115 may determine what data to transfer to the database or disk to be stored for the subscriber's session or for the subscriber event.

In the case of a read operation, the output module 115 may be configured to read a row from the database or disk. The serialization module 110 may determine a plurality of rows from the single row retrieved from the database and may provide the plurality of rows to the in-memory component 125 to be stored. The system 100 then may use each row separately or provide each row separately to a further network component that requires the data.

In other cases, the system may further include a separate deserialization module 130. During a read operation, the deserialization module 130 can be configured to review the row read by the output module 115. For example, the deserialization module 130 can be configured to determine a plurality of rows from the single row retrieved from the database. The deserialization module 130 may be further configured to provide the plurality of rows to the memory component 125 to be stored.

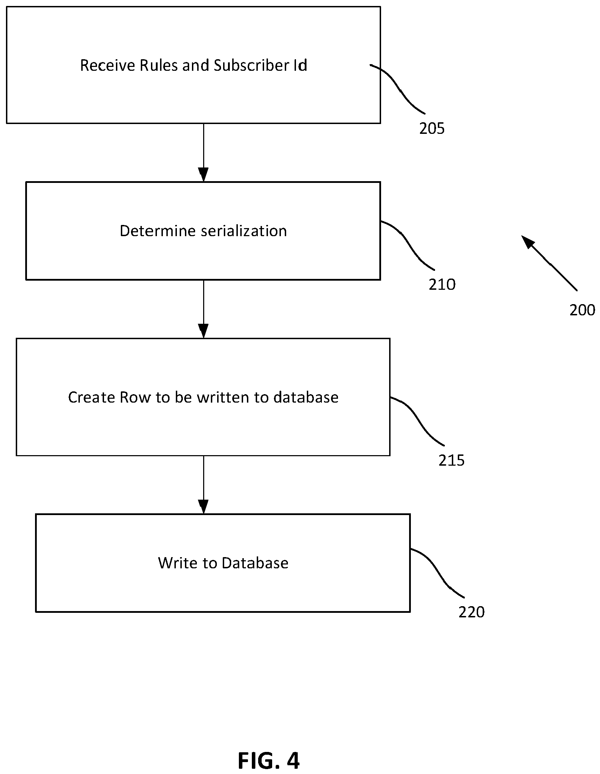

Figure 4 illustrates a method 200 for database instructions according to an embodiment. The method is intended to improve or optimize database instructions in a computer network. The input module 105 is configured to determine a new subscriber event associated with a traffic flow and provide the subscriber data to a PCRF. The input module may further receive subscriber id information as well as rules or services associated with the subscriber, from for example, the PCRF or other network device, at 205. At 210, the serialization module 110 determines the serialization to aggregate the plurality of rows to a single row. The serialization module 110 will create the row to be written to the database at 215. At 220, the output module 115 will write the module to the database.

It will be understood that in a read operation, the method will be similar but in reverse, where the output module 115 retrieves the data and the serialization module 110 or the deserialization module 130 will determine the plurality of rows from the single database row entry.

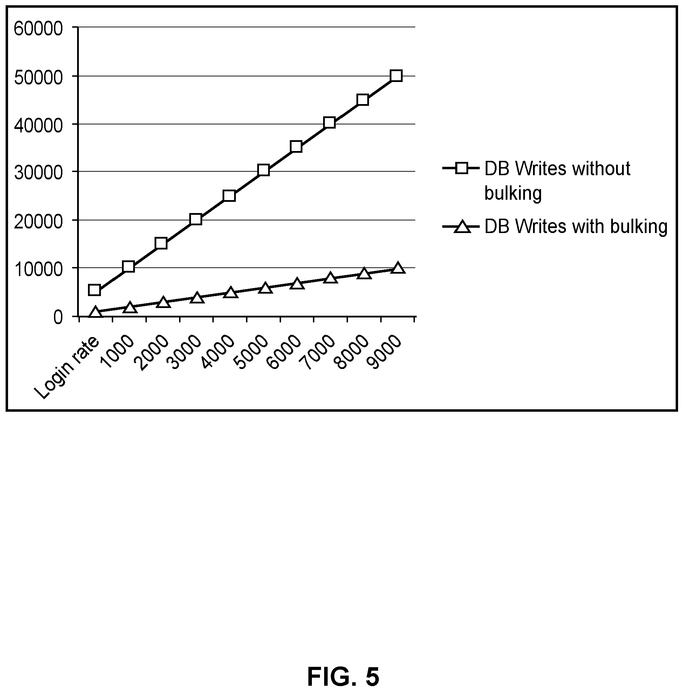

Figure 5 is a graph that depicts the number of database operations per table with varying login rate in an example where there are 5 individual rows per subscriber login. As an example, at a login rate of 1,000 logins/second (sec), there would have been 5,000 database operations/sec. As a database may not be suitable or able to process this number of writes or operations per second, the network may experience a bottle-neck or slowdown due to this situation. Embodiments of the system and method detailed herein are intended to reduce the number of operations in this example to 1,000 database operations/sec.

Similarly, and as shown in figure 5, at a login-rate of 5,000 logins per second, the conventional method of writing database instructions would result in 25,000 database operations per second. Embodiments of the system and method detailed herein are intended to reduce level to 5,000 database operations per second.

Further, for a login-rate of 10,000 logins/sec, the database writes using a typical conventional method would be 50,000 database operations per second. It is estimated that with the embodiments of the system and method disclosed herein, operations would be reduced to 10,000 operations per second. Further savings may be realized for networks which would require further rows written to the database that may now be written as a single row. Theoretically, when row size to a database exceeds a threshold number, database writes may become slower. Typically, even a slow database write for a single row is generally faster than writing multiple rows. It will be understood that there is generally no hard limit on the number of rows that could be combined.

In general, conventional solutions provide for adding more control plane nodes in case row operations when the operations could not be supported on a single node. When the database writes become bottle-necked, to handle network load, conventionally, more nodes need to be deployed. For example, though the module which handles all the application logic on the node has enough resources to cater to a specific network load, the database writes become the bottle neck. Therefore, conventionally to scale the solution, the operator would be required to deploy more processing nodes.

In another conventional solution, the control plane may drop non-critical row operations to cope with a throughput limitation on the database, memory and/or disk. In this case, there may be some loss of data on failovers and/or restarts that may affect subscriber's QoE or the performance of the network.

Embodiments of the system or method are configured such that, during any transaction, the system is intended to persist subscriber state to database/disk as a single operation. A single transaction could result in multiple in-memory rows created, updated, deleted, or the like, for a subscriber.

When no rows exist associated with a subscriber, a new row or rows are created in-memory of the system. The system provides for persist state to the database as a single create operation with a single database row containing serialized row bytes of all new rows.

When at least one row exists and is associated with a subscriber, the system is configured to provide for a transaction result in one/many row updates, persist state to database as a single update operation with the database row containing serialized bytes of all in-memory rows.

When new rows are created, for a subscriber with existing rows, the system is configured to persist state to the database as a single update operation with the database row containing serialized bytes of all in-memory rows.

When at least one but not all rows are deleted for a subscriber, the system is configured to persist state to the database as a single update operation with the database row containing serialized bytes of remaining in-memory rows.

When the last in-memory row for a subscriber is deleted, the system is configured to provide for persist state to the database as a single delete operation.

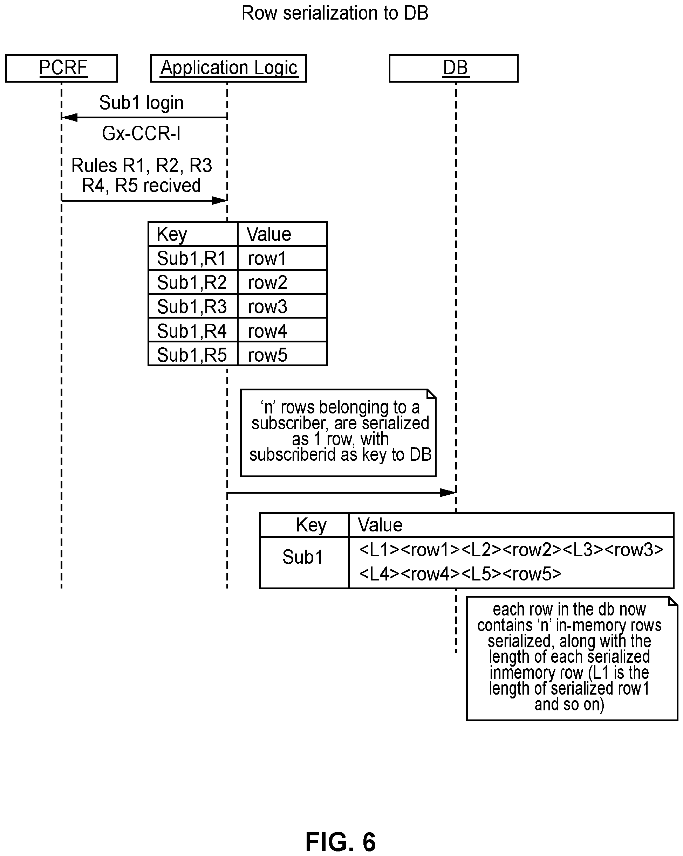

Figure 6 illustrates a sequence diagram for row serialization according to an embodiment of the system and method detailed herein. On a subscriber event, such as a subscriber login, the application logic provides subscriber detail to the PCRF. The PCRF retrieves, for example, 5 rules and provides these rules to the input module over a Gx interface. It will be understood that more or fewer rules may be provided depending on the configuration of the control plane and computer network.

Once the rules are received, an in-memory table, associated with the memory component of the system, stores the rules for a subscriber with, for example, two primary keys (Subscriber ID and the Rule Name). The system is then configured to concatenate the data as a single row via the serialization module. While writing to the database, the serialization module is configured to use the subscriber-id as the sole primary-key, and write 5 rows, along with the length of each of the serialized row as value, to a single row. The length of each row is determined by the serialization module and may be used later when the single row is read from the database, to deserialize the single row read into multiple in-memory rows. Once the single row has been prepared, it may be written to the database as a single row, reducing the number of operations required for the database.

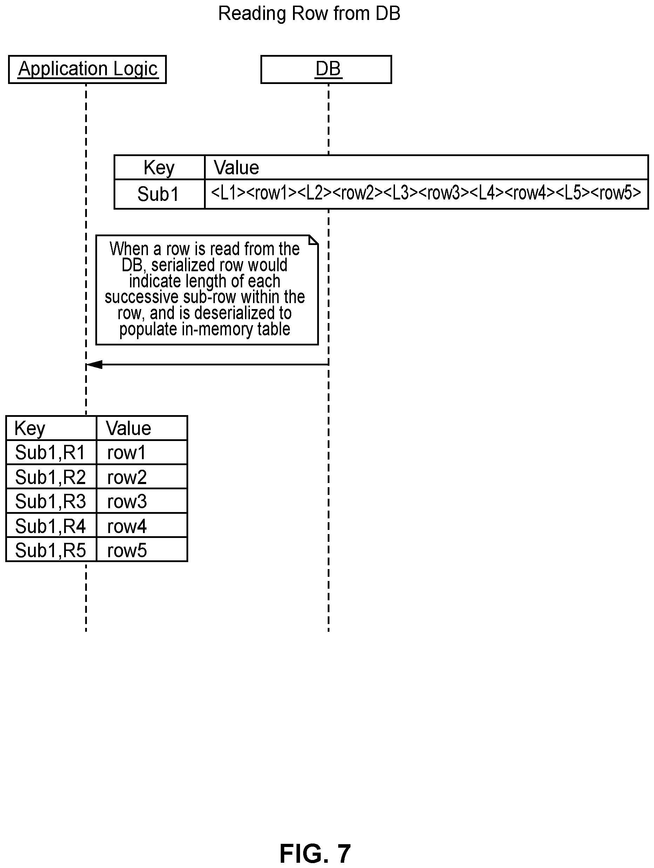

Figure 7 illustrates a sequence diagram for reading a row from the database. A row written to the database is intended to include multiple sub-rows along with the length of each sub-row. The serialized sub-rows are intended to contain all the columns including the key columns or each individual sub-row. On reading a row from the database, via the output module, each sub-row is read as "L" bytes, and deserialized to create the columns (including the key columns) to populate an in-memory table of the system with 5 rows for the subscriber Id.

The system and corresponding application logic is intended to no longer be limited by the database or disk write throughput. Embodiments of the system and method detailed herein are intended to apply to multiple applications on the control plane including Policy Enforcement (3GPP Gx), Online Charging (3GPP Gy), Application Monitoring (3GPP Sd) and the like.

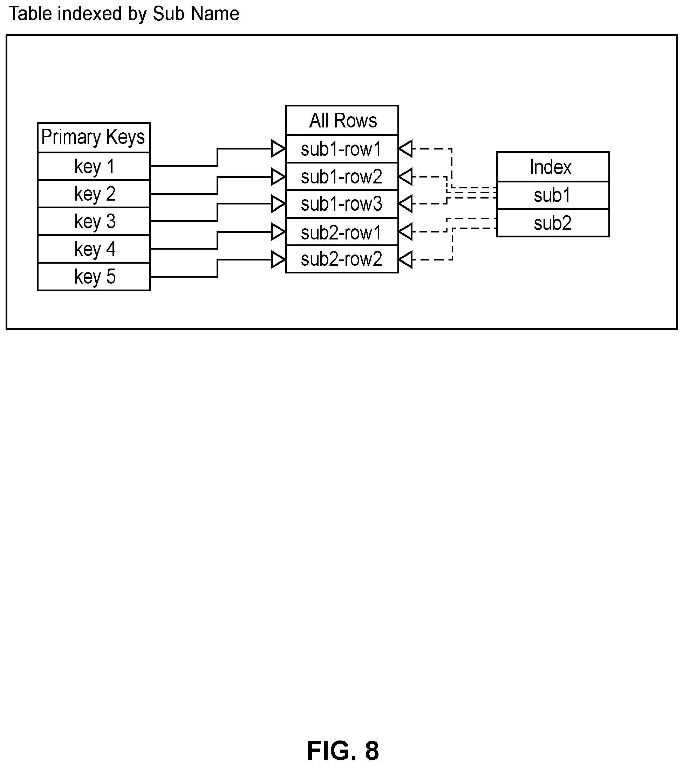

Embodiments of the system and method are configured to provide an in-memory table. The in-memory table, along with query row by primary key, is intended to be indexed by a secondary key. Figure 8 illustrates in-memory state management according to an embodiment. Rows, along with being keyed by the primary-key, are also intended to be indexed by "subscriber-id'. In the example shown in figure 8, rows include sub1-row1, sub1-row2, sub1-row3 are indexed by "sub1", an example of a subscriber id. When a subscriber event, sometimes referred to as a transaction, is processed for subscriber "sub1", rows with index "sub1" are persisted to the database as a single row.

On a second event or transaction when a fourth row sub1-row4 is added to the table, an update row operation is written to the database with key "sub1" and value containing serialized rows: row1, row2, row3 and row4. During a transaction, when one row (for example: row3) is deleted, an update operation is performed to the database, with key "sub1" and value containing serialized rows: row1, row2, row4. When the last row belonging to index "sub1" is deleted, a delete operation is performed on the database with key "sub1".

In a specific example, on login of a subscriber, no rows will currently exist, and three new rows may be created in the memory component that include data received from external network components and are associated with the subscriber id.

At the end of the transaction, a look-up of all the rows with index "subscriber-id" may be performed. The system may determine that no row existed for the subscriber prior to the current transaction. Subscriber state may then be persisted to the database as a single create operation, with the database row containing the data of all three in-memory rows, with each serialized row containing the length of serialized bytes as a prefix. Table 1 illustrates an example of this row.

| **Key** | **Value** |
|---|---|
| **<subscriber-id>** | **<L1><row1-bytes><L2><row2-bytes><L3><row3bytes>** |

In continuing to access the computer network, the subscriber may already have a row associated with the subscriber id in the database. A new event or transaction may provide for updates to two existing rows in-memory. At the end of the transaction, the system is configured to look up all rows with index "subscriber-id". The output module of the system determines that there is a row that exists prior to the current transaction. The in-memory rows are serialized, and serialized row bytes are concatenated with length of each row prefixed. This resulting single serialized row bytes is persisted to the database as subscriber state with a single update operation to update the database table. Table 2 illustrates an example of an updated row write of the single concatenated row. Examples may vary from application to application. In case of Diameter Gx, an update may be a simple network driven trigger to modify QoS provided during time of day, or when subscriber usage threshold for a defined interval exceeds or other situation.

| **Key** | **Value** |
|---|---|
| **<subscriber-id>** | **<L1><row1-unchanged-bytes><L2><row2-updated-bytes><L3><row3-updated-bytes>** |

As the subscriber continues the data session, it may be that three rows exist, and a new transaction creates 2 new rows in-memory of the system. At the end of the transaction, the system is configured to determine finds all rows with index "subscriber-id". Application logic finds 2 new rows are created, and 3 rows existed prior to the current transaction. Each of the in-memory row are serialized, and the serialized bytes are concatenated along with the length of each of the serialized row bytes by the serialization module. This subscriber state may then be persisted to the database as a single update operation. Table 3 illustrates an example of an updated row write of the single concatenated row.

| **Key** | **Value** |
|---|---|
| **<subscriber-id>** | **<L1><row1-unchanged-bytes><L2><row2-unchanged-bytes><L3><row3-unchanged-bytes><L4><row4-bytes><L5><row5-bytes>** |

As the subscriber continues the data session, the subscriber may have 5 rows that have existed in-memory of the system and a new transaction requires that two rows are deleted. This may also vary by application. In a specific example a PCRF-Gx case, the PCRF may wish to disable a rule, which would require a traditional row of the database to be deleted.

At the end of the transaction, the system is configured to determine all the rows with index "subscriber-id". The subscriber state is persisted to the database as a single updated operation with the database row containing serialized bytes for the rows remaining in-memory. Table 5 illustrates an example of an updated row write of the single concatenated row.

| **Key** | **Value** |
|---|---|
| **<su bscriber-id>** | **<L3><row3-bytes><L4><row4-bytes><L5><row5-bytes>** |

In this example, there may be a further event that may lead to all in-memory rows to be deleted, for example, the data session ends. At the end of transaction, the system determines that no further rows are required to exist for the subscriber. The output module of the system may then issues a delete operation to the database with key "subscriber-id". This would remove the row in a single transaction with the database, instead of requiring multiple operations to delete several rows that may still be operational.

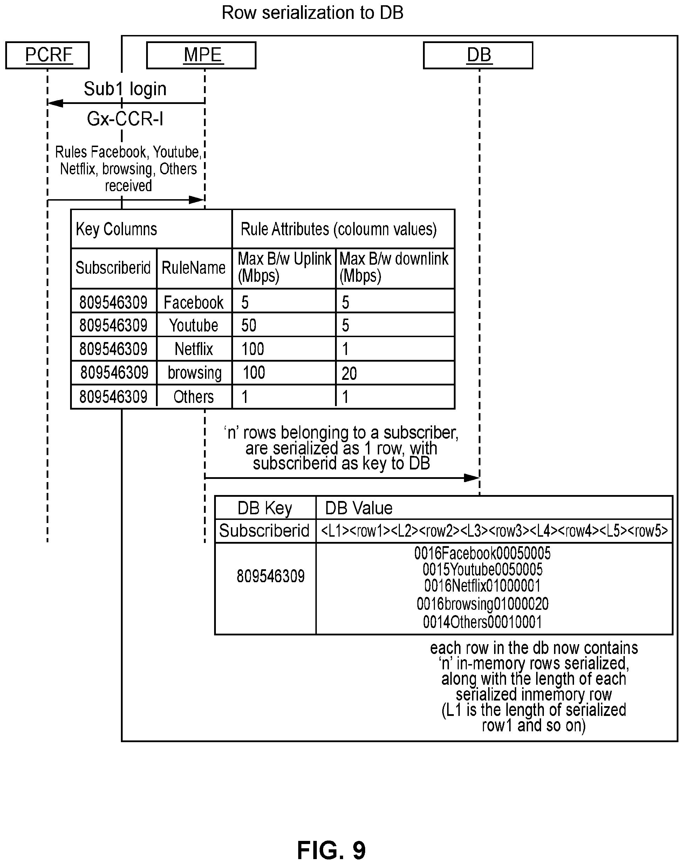

Figure 9 provides a specific example on how multiple rows in memory for a subscriber can be serialized and written to a database as a single row. In this figure, the table in memory includes 2 non-key columns: Max bandwidth uplink and Max bandwidth downlink, with each column defined as a 4 byte column. It will be understood that in a general use-case, the number of non-key columns may be significantly more and the example is simplified to provide for an understanding of the system and method detailed herein.

A subscriber with Id "809546309" may log into the system. The PCRF is notified about the subscriber login and the PCRF may then send five rules associated with the subscriber Id. When the rules are received, in-memory rows are populated using 2 primary keys, the Subscriberld and the RuleName. The in-memory rows of the 5 rules are shown in Figure 9.

After the rules are reviewed and processed, these 5 rows need to be persisted to the associated database. The system is configured to serialize the 5 rows, via the serialization module, to allow for a single row to the database. The serialization module concatenates the 5 serialized rows as 1 row, with length of each serialized row prefixed with length of the row, for example: 0016Facebook00050005. As can be seen from the example, the first 2 bytes indicates length of the row to read. To keep the specific example simple there values are shown as decimals. In this example, "Facebook" is the rule-name, 0005 is a 4 byte value indicating Max b/w uplink, and subsequent 0005 is a 4 byte value indicating Max b/w downlink. When a row is read from the database, for example by the output module, the deserialization module is configured to de-serialize the single row and store 5 in-memory rows.

In the preceding description, for purposes of explanation, numerous details are set forth in order to provide a thorough understanding of the embodiments. However, it will be apparent to one skilled in the art that these specific details may not be required. In other instances, well-known structures may be shown in block diagram form in order not to obscure the understanding. For example, specific details are not provided as to whether the embodiments or elements thereof described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A method for database instructions in a computer network environment, the method comprising:
determining a subscriber event associated with a traffic flow;
providing subscriber data, associated with the subscriber event to a network device;
receiving, from the network device, subscriber id information and a plurality of subscriber rules or services as a plurality of rows;
aggregating the plurality of rows to a single row; and
writing the single row to a database.

2. A method according to claim 1 wherein aggregating the plurality of rows comprises:
determining a primary key for the single row;
determining the number of bytes or length of each row of the plurality of rows;
creating a prefix for as the row length for each of the plurality of rows; and
concatenating the plurality of rows wherein each row is prefixed by the row length followed by the row data in the single row.

3. A method according to claim 2, wherein the primary key is based on the subscriber id.

4. A method according to claim 1, wherein the network device is a Policy and Charging Rules Function (PCRF) or the Online Charging System (OCS).

5. A method according to claim 1, wherein the subscriber event is subscriber login, a subscriber policy change or a subscriber charging change.

6. A method according to claim 1, wherein aggregating the plurality of rows comprises:
determining if the external database has a row stored with the subscriber id;
retrieving the stored row from the database;
determining the number of bytes or length of each row of the plurality of rows to be added to the stored row;
creating a prefix for as the row length for each of the plurality of rows to be added to the stored row; and
concatenating the plurality of rows wherein each row is prefixed by the row length followed by the row data to the stored row.

7. A method according to claim 1, further comprising:
determining if the database has a row stored with the subscriber id;
determining if the subscriber event is associated with deleting any data previously stored in the database;
removing the data from the row;
concatenating the remaining rows to the single row; and
writing the single row to the database.

8. A method according to claim 1, further comprising:
retrieving the single row stored in the database;
reading the single row to determine the plurality of rows; and
deserialzing the single row into the plurality of rows.

9. A system for database instructions in a computer network environment, the system comprising:
an input module configured to determine a subscriber event associated with a traffic flow, provide subscriber data, associated with the subscriber event to a network device; and receive, from the network device, subscriber id information and a plurality of subscriber rules or services as a plurality of rows;
a serialization module configured to aggregate the plurality of rows to a single row; and
an output module configured to write the single row to a database.

10. A system according to claim 9, wherein the serialization module is further configured to:
determine a primary key for the single row;
determine the number of bytes or length of each row of the plurality of rows;
create a prefix for as the row length for each of the plurality of rows; and
concatenate the plurality of rows wherein each row is prefixed by the row length followed by the row data in the single row.

11. A system according to claim 10, wherein the primary key is based on the subscriber id.

12. A system according to any one of claims 9 to 11, wherein the network device is a Policy and Charging Rules Function (PCRF) or the Online Charging System (OCS).

13. A system according to any one of claims 9 to 12, wherein the output module is figured configured to:
determine if the external database has a row stored with the subscriber id; and
retrieve the stored row from the database; and
the serialization module is further configured to:
determine the number of bytes or length of each row of the plurality of rows to be added to the stored row;
create a prefix for as the row length for each of the plurality of rows to be added to the stored row; and
concatenate the plurality of rows wherein each row is prefixed by the row length followed by the row data to the stored row.

14. A system according to any one of claims 9 to 13, wherein the output module further configured to:
determine if the database has a row stored with the subscriber id; and
determine if the subscriber event is associated with deleting any data previously stored in the database; and
the system further comprises a deserialization module configured to remove the data from the row; and
concatenate the remaining rows to the single row.

15. A system according to any one of claims 9 to 14--, the system further comprising a deserialization module configured to:
read the single row to determine the plurality of rows; and
deserialize the single row into the plurality of rows.
